# EUROPEAN PATENT SPECIFICATION

(11) **EP 3 825 172 B1**
(45) Date of publication and mention of the grant of the patent: **15.11.2023**
(21) Application number: 19838612.0
(22) Date of filing: 14.07.2019
(51) Int. Cl.: G08B 21/02, B60N 2/28, G08B 21/22, B60R 16/033, B60N 2/00

(54) **CHILD SAFETY SEAT WITH INSTALLATION PROMPT FUNCTION AND INSTALLATION PROMPT METHOD THEREFOR**
KINDERSICHERHEITSSITZ MIT INSTALLATIONSAUFFORDERUNGSFUNKTION UND INSTALLATIONSAUFFORDERUNGSVERFAHREN DAFÜR
SIÈGE DE SÉCURITÉ POUR ENFANT AVEC FONCTION DE GUIDAGE D'INSTALLATION ET PROCÉDÉ DE GUIDAGE D'INSTALLATION ASSOCIÉ

(30) Priority: 17.07.2018 CN 201810786050
(43) Date of publication of application: 26.05.2021
(73) Proprietor: Ningbo Baby First Baby Products Co., Ltd., Yuyao, Zhejiang 315412 (CN)
(72) Inventor: CAO, Wenyong, Yuyao, Zhejiang 315412 (CN); CHENG, Fei, Yuyao, Zhejiang 315412 (CN)
(74) Representative: Ipside
(86) International application number: PCT/CN2019/095917
(87) International publication number: WO 2020/015597

(56) References cited:
- CN-A- 104 755 316
- CN-A- 105 501 175
- CN-A- 106 114 450
- CN-A- 106 114 450
- CN-A- 107 499 193
- CN-U- 207 140 871
- CN-U- 208 576 460
- US-A1- 2012 049 495
- US-A1- 2017 305 340
- US-B1- 8 058 983

## Description

### Technical Field

The present invention relates to a child safety seat, in particular to a child safety seat with an installation prompt function and an installation prompt method for child safety seat.

### Background Art

An automobile child safety seat, also called as a child restraint system (CRS), is a seat which is specially designed for children at different ages (or weights) and installed in an automobile and which can effectively improve the safety when a child is riding in the automobile. The child safety seat is defined by the European regulation ECE R44/03 as a child safety protection system which can be fixed to a motor vehicle and is composed of a safety belt assembly with buckles or a flexible component, an adjustment mechanism, accessories and the like. The child safety seat may be combined with additional devices, such as a portable child's cot, a baby cradle, an auxiliary seat or a collision protector. In case of collision or sudden slowing down of the automobile, the child safety seat may buffer the impact force to the child and restrict the body of the child from moving so as to reduce injury to the child, thereby ensuring the safety when the child is riding in the automobile.

An existing child safety seat cannot intuitively, reliably and actively give prompt information that a child has sat in the seat whether an ISOFIX assembly is installed in place, whether an upper belt buckle and a lower belt buckle of a safety belt are connected in place, and whether an upper pull belt assembly is installed on an upper anchor point of an automobile seat to a parent or related user, such that use accidents may not be completely prevented.

A patent application No. US8058983B1 discloses a baby seat occupant detection system to reliably remind forgetful or negligent caregivers when they have an infant in a car seat inside a vehicle and have left a predetermined proximity around the vehicle. The disclosure comprises a temperature detector for detecting unsafe temperatures and sounding an alarm to alert a caregiver when the temperature inside a vehicle has risen to a level which is unsafe for the occupant left unattended in the vehicle.

### Summary of the Invention

The present invention designs a child safety seat with an installation prompt function and an installation prompt method therefor. The technical problem to be solved by the present invention is that an existing child safety seat cannot intuitively, reliably and actively give prompt information that a child has sat in the seat whether an ISOFIX assembly is installed in place, whether an upper belt buckle and a lower belt buckle of a safety belt are connected in place, and whether an upper pull belt assembly is installed on an upper anchor point of an automobile seat to a parent or related user, such that use accidents may not be completely prevented.

In order to solve the above existing technical problem, the present invention comprises the features of claim 1 and the method according to claim 7.

Further, the child seat installation and use signal collection module (7) uses at least the following several working signals: a, a signal indicating whether a pressure sensor in a support part of a seat back (8) or a cushion of the child safety seat is activated; b, a signal indicating whether a microswitch in an ISOFIX assembly (12) is triggered when the ISOFIX assembly (12) is installed on a lower anchor point (131) of an automobile seat (13); c, a signal indicating whether a microswitch in an upper belt buckle (4) and/or a lower belt buckle (5) is triggered when the upper belt buckle (4) and the lower belt buckle (5) of a shoulder belt (16) are connected; d, a signal indicating whether a microswitch in an upper pull belt assembly (3) is triggered when the child safety seat is connected to an upper anchor point (132) in an automobile by means of the upper pull belt assembly (3); f, a signal indicating whether a microswitch in a supporting leg of the child safety seat is triggered when the supporting leg makes contact with presses an automobile chassis after the supporting leg is installed.

Further, the child safety seat further comprises a transmitting module, and the child seat installation and use signal collection module (7) sends a signal to the child seat installation and use prompt module (1) through the transmitting module in a wired or wireless manner.

Further, the child seat installation and use signal collection module (7) is installed in the seat back;
or/and the child seat installation and use prompt module (1) is installed in a headrest;
or/and the indicating lights are installed on the headrest (2) of the child safety seat; the indicating lights comprise one or more of a power LED indicating light (L1), a pressure sensor LED indicating light (L2), an ISOFIX installed LED indicating light (L3), a belt buckle installed LED indicating light (L4), an upper pull belt assembly installed LED indicating light (L5), and a supporting leg installed LED indicating light (L6).

Further, the power supply further comprises a battery (15), and the battery (15) is used for supplying power to the child seat installation and use prompt module (1); and/or the power supply comprises a battery compartment (9) and a USB interface (10), and the battery compartment (9) and the USB interface (10) are used for supplying power to the child seat installation and use signal collection module (7).

An installation prompt method according to the invention as claim 7 comprises:
step 1, turning on a power LED indicating light (L1) to indicate that the above control panel is in a normal state when a power supply supplies power to a child seat installation and use prompt module (1) and a child seat installation and use signal collection module (7), and turning off the power LED indicating light (L1) if the power supply breaks down during power supplying; and
step 2, activating a pressure sensor in a support part of a seat back (8) or a cushion of the child safety seat if a child sits in the child safety seat, sending a signal to the child seat installation and use signal collection module (7) by the pressure sensor (6), sending a signal to the child seat installation and use prompt module (1) by the child seat installation and use signal collection module (7) in a wired or wireless manner, turning on a pressure sensor LED indicating light (L2) by the child seat installation and use prompt module (1) after receiving the signal to indicate that the child has sat in the seat, and turning off the pressure sensor LED indicating light (L2) if the child has left the seat.

Further, in step 31, if the ISOFIX assembly (12) is correctly installed on a lower anchor point (131) of the automobile seat (13), a microswitch in the ISOFIX assembly (12) is triggered, the microswitch in the ISOFIX assembly (12) sends a signal to the child seat installation and use signal collection module (7), the child seat installation and use signal collection module (7) sends the signal to the child seat installation and use prompt module (1) in a wired or wireless manner, the child seat installation and use prompt module (1) turns on the ISOFIX installed LED indicating light (L3) after receiving the signal to indicate that an ISOFIX is installed, and if a hook of the ISOFIX assembly (12) is disengaged from the lower anchor point (131) of the automobile seat (13) due to vibration or other reasons during driving, the ISOFIX installed LED indicating light (L3) is turned off to indicate that the ISOFIX assembly (12) is not installed correctly.

Further, in step 32, if an upper belt buckle (4) of a shoulder belt is correctly installed in a lower belt buckle (5), a microswitch in the lower belt buckle (5) is triggered, the microswitch in the lower belt buckle (5) sends a signal to the child seat installation and use signal collection module (7), the child seat installation and use signal collection module (7) sends the signal to the child seat installation and use prompt module (1) in a wired or wireless manner, the child seat installation and use prompt module (1) turns on a belt buckle installed LED indicating light (L4) after receiving the signal to indicate that the belt buckles are installed, and if the upper belt buckle is separated from the lower belt buckle due to vibration or other reasons during driving, the belt buckle installed LED indicating light (L4) is turned off to indicate that the belt buckles are not installed correctly.

Further, in step 33, if an upper pull belt assembly (3) is correctly installed on an upper anchor point (132) of the automobile seat (13) and tightened to a set tension, a microswitch in the upper pull belt assembly (3) is triggered, the microswitch in the upper pull belt assembly (3) sends a signal to the child seat installation and use signal collection module (7), the child seat installation and use signal collection module (7) sends the signal to the child seat installation and use prompt module (1) in a wired or wireless manner, the child seat installation and use prompt module (1) turns on an upper pull belt assembly (3) installed LED indicating light (L5) after receiving the signal to indicate that the upper pull belt assembly (3) is installed, and if a hook (31) of the upper pull belt assembly (3) is disengaged from the upper anchor point (132) in the automobile due to vibration or other reasons during driving or the upper pull belt assembly (3) is loosened and does not reach the set tension, the upper pull belt assembly (3) installed LED indicating light (L5) is turned off to indicate that the upper pull belt assembly (3) is not installed correctly.

Further, in step 34, if one end of a supporting leg is pressed with an automobile chassis to reach a set pressure value after the supporting leg is installed, a microswitch in the supporting leg is triggered, the microswitch in the supporting leg sends a signal to the child seat installation and use signal collection module (7), the child seat installation and use signal collection module (7) sends the signal to the child seat installation and use prompt module (1) in a wired or wireless manner, the child seat installation and use prompt module (1) turns on a supporting leg installed LED indicating light (L6) after receiving the signal to indicate that the supporting leg is installed, and if the supporting leg is separated from the automobile chassis or the value of the pressure between the supporting leg and the automobile chassis does not reach the set value due to vibration or other reasons during driving, the supporting leg installed LED indicating light (L6) is turned off to indicate that the supporting leg is not installed correctly.

The child safety seat with an installation prompt function and the installation prompt method therefor have the following beneficial effects:
in the present invention, by means of collecting information from respective sensors that indicate whether various important safety components are installed in place, and displaying same by means of the indicating lights, it is convenient for a parent and a user to quickly and accurately determine whether a child safety seat is being used correctly, thus further improving the safety when a child is riding in the automobile.

### Brief Description of the Drawings

Fig. 1: an exploded view of a child safety seat with an installation prompt function of the present invention;
Fig. 2: a perspective view of the child safety seat with an installation prompt function of the present invention;
Fig. 3: a distribution and use diagram of the child safety seat with an installation prompt function of the present invention; and
Fig. 4: a use state diagram of the child safety seat with an installation prompt function of the present invention.

### List of reference numerals:

1-child seat installation and use signal collection module; 2-headrest; 3-upper pull belt assembly; 31-hook; 4-upper belt buckle; 5-lower belt buckle; 6-pressure sensor; 7-child seat installation and use signal collection module; 8-seat back; 9-battery compartment; 10-USB interface; 11-base; 12-ISOFIX assembly; 13-automobile seat; 131-lower anchor point; 132-upper anchor point; 14-headrest rear cover; 15-battery; 16-shoulder belt;
L1-power LED indicating light; L2-pressure sensor LED indicating light; L3-ISOFIX installed LED indicating light; L4-belt buckle installed LED indicating light; L5-upper pull belt assembly installed LED indicating light; L6- supporting leg installed LED indicating light.

### Detailed Description of Embodiments

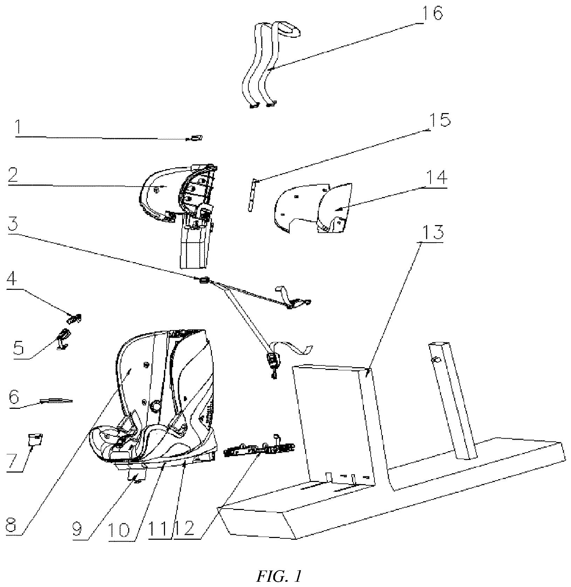

Further description of the present invention is given below with reference to Figs. 1 to 4.

As shown in Fig. 1, a child seat installation and use signal collection module 1, a headrest rear cover 14 and a battery 15 are installed in a headrest 2, the headrest 2 is installed above an upper portion of a seat back 8, a shoulder belt 16 is installed on the seat back 8, the shoulder belt 16 allows an upper belt buckle 4 to be installed on the seat back 8 via a hole in the upper belt buckle 4, a lower belt buckle 5 is installed on the seat back 8, a pressure sensor 6 is installed on a child support part of the seat back 8, a child seat installation and use signal collection module 7 is installed in the seat back 8, a base 11 is installed below the seat back 8, and a battery compartment 9, a USB interface 10 and an ISOFIX assembly 12 are installed in the base 11. The whole child seat is installed on an automobile seat 13, and one end of an upper pull belt assembly 3 is installed on the seat back 8.

Connecting method: the child seat installation and use signal collection module 1 and the battery 15 are connected by a conductive wire to transmit electric energy. A microswitch in the lower belt buckle 5, the pressure sensor 6, a tension sensor in the upper pull belt assembly 3, a microswitch in the ISOFIX assembly 12, the battery compartment 9 and the USB interface 10 are connected to the child seat installation and use signal collection module 7 by conductive wires. The child seat installation and use signal collection module 7 and the child seat installation and use signal collection module 1 are connected through Bluetooth or other wireless manners or the conductive wire, and a state signal of the child seat installation and use signal collection module 7 is transmitted to the child seat installation and use prompt module 1. The battery 15 supplies power to the child seat installation and use prompt module 1, and the battery compartment 9 and the USB interface 10 supply power to the child seat installation and use signal collection module 7.

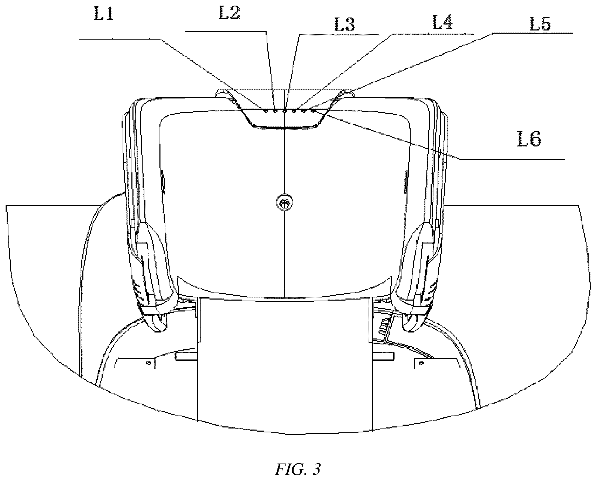

Operating principle: when a live battery is installed in the battery compartment 11 or a power supply supplies power to the USB interface 9, and the battery 15 normally supplies power, the system starts to operate, in this case, a power LED indicating light L1 is turned on as shown in Fig. 3 and indicates that the power supply is connected, and if the power supply breaks down during power supplying, the power LED indicating light L1 is turned off. After the power supply is connected, if a child sits in the child safety seat, the pressure sensor 6 is activated, the pressure sensor 6 sends a signal to the child seat installation and use signal collection module 7, the child seat installation and use signal collection module 7 sends the signal to the child seat installation and use prompt module 1 in a wired or wireless manner, the child seat installation and use prompt module 1 turns on a pressure sensor LED indicating light L2 after receiving the signal to indicate that the child has sat in the seat, and if the child has left the seat, the pressure sensor LED indicating light L2 is turned off.

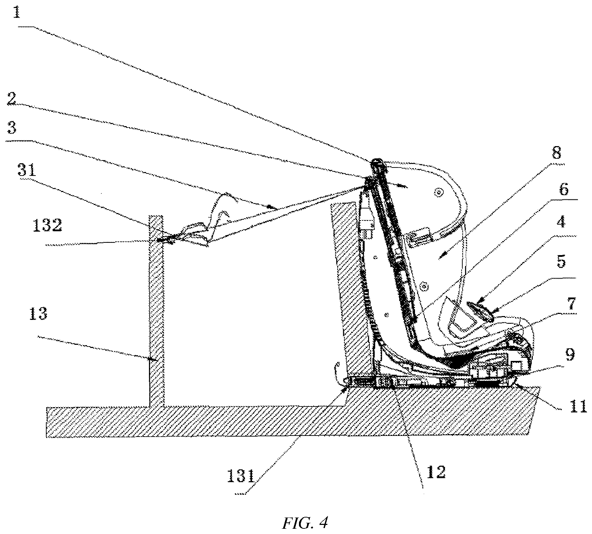

After the child sits in the seat, the system detects installation states of all the components and turns on corresponding lights to prompt that: if the ISOFIX assembly 12 is correctly installed on a lower anchor point 131 of the automobile seat 13, as shown in Fig. 4, a microswitch in the ISOFIX assembly 12 is triggered, the microswitch in the ISOFIX assembly 12 sends a signal to the child seat installation and use signal collection module 7, the child seat installation and use signal collection module 7 sends the signal to the child seat installation and use prompt module 1 in a wired or wireless manner, the child seat installation and use prompt module 1 turns on the ISOFIX installed LED indicating light L3 after receiving the signal to indicate that an ISOFIX is installed, and if a hook of the ISOFIX assembly 12 is disengaged from the lower anchor point 131 of the automobile seat 13 due to vibration or other reasons during driving, the ISOFIX installed LED indicating light L3 is turned off to indicate that the ISOFIX is not installed correctly.

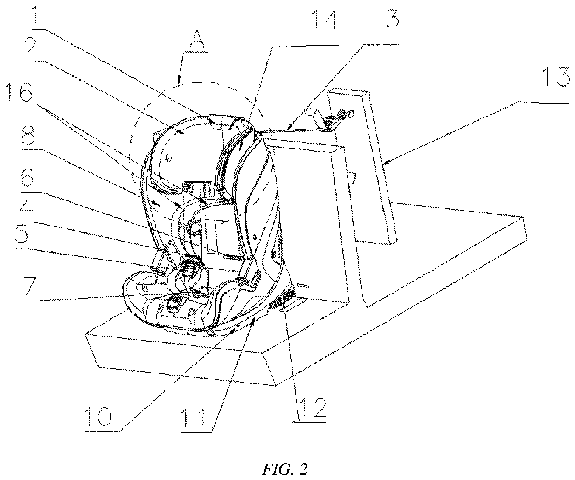

If the upper belt buckle 4 is correctly installed in the lower belt buckle 5, as shown in Fig. 2, a microswitch in the lower belt buckle 5 is triggered, the microswitch in the lower belt buckle 5 sends a signal to the child seat installation and use signal collection module 7, the child seat installation and use signal collection module 7 sends the signal to the child seat installation and use prompt module 1 in a wired or wireless manner, the child seat installation and use prompt module 1 turns on a belt buckle installed LED indicating light L4 after receiving the signal to indicate that the belt buckles are installed, and if the upper belt buckle is separated from the lower belt buckle due to vibration or other reasons during driving, the belt buckle installed LED indicating light L4 is turned off to indicate that the belt buckles are not installed correctly.

If the upper pull belt assembly 3 is correctly installed on an upper anchor point 132 of the automobile seat 13 and tightened to a set tension, as shown in Fig. 4, a microswitch in the upper pull belt assembly 3 is triggered, the microswitch in the upper pull belt assembly 3 sends a signal to the child seat installation and use signal collection module 7, the child seat installation and use signal collection module 7 sends the signal to the child seat installation and use prompt module 1 in a wired or wireless manner, the child seat installation and use prompt module 1 turns on an upper pull belt assembly 3 installed LED indicating light L5 after receiving the signal to indicate that the upper pull belt assembly 3 is installed, as shown in Fig. 3, and if a hook 31 of the upper pull belt assembly 3 is disengaged from the upper anchor point 132 in the automobile due to vibration or other reasons during driving or the upper pull belt assembly 3 is loosened and does not reach the set tension, i.e., a state as shown in Fig. 4, the upper pull belt assembly 3 installed LED indicating light L5 is turned off to indicate that the upper pull belt assembly 3 is not installed correctly.

If one end of a supporting leg is squeezed with an automobile chassis to reach the set pressure value after the supporting leg is installed, a microswitch in the supporting leg is triggered, the microswitch in the supporting leg sends a signal to the child seat installation and use signal collection module 7, the child seat installation and use signal collection module 7 sends a signal to the child seat installation and use signal collection module 1 in a wired or wireless manner, the child seat installation and use signal collection module 1 turns on a supporting leg installed LED indicating light L6 as shown in Fig. 3 after receiving the signal to indicate that the supporting leg is installed, and if the supporting leg is separated from the automobile chassis or the value of pressure between the supporting leg and the automobile chassis does not reach the set value due to vibration or other reasons during running, the supporting leg installed LED indicating light L6 is turned off to indicate that the supporting leg is not installed correctly.

## Claims

1. A child safety seat with an installation prompt function, **characterized by** comprising:
a child seat installation and use signal collection module (7) for collecting a signal indicating whether various parts of the child safety seat are installed in place on an automobile;
a child seat installation and use prompt module (1) for correspondingly turning on or turning off, after receiving one or more signals sent by the child seat installation and use signal collection module (7), one or more indicating lights to indicate whether the child safety seat is installed in place on various connecting parts of the automobile; and
a power supply for supplying power to the child seat installation and use signal collection module (7) and the child seat installation and use prompt module (1).

2. A child safety seat with an installation prompt function, according to claim 1, wherein
the child seat installation and use signal collection module (7) is configured to collect a signal indicating whether various parts of the child safety seat are installed in place on an automobile and a signal indicating whether a child is using the child safety seat;
the child seat installation and use prompt module (1) is configured for correspondingly turning on or turning off, after receiving one or more signals sent by the child seat installation and use signal collection module (7), one or more indicating lights to indicate whether the child safety seat is installed in place on various connecting parts of the automobile or whether a child is using the child safety seat; and
a power supply for supplying power to the child seat installation and use signal collection module (7) and the child seat installation and use prompt module (1).

3. The child safety seat with an installation prompt function according to claim 1 or 2, **characterized in that**
the child seat installation and use signal collection module (7) uses at least the following several working signals: a, a signal indicating whether a pressure sensor in a support part of a seat back (8) or a cushion of the child safety seat is activated; b, a signal indicating whether a microswitch in an ISOFIX assembly (12) is triggered when the ISOFIX assembly (12) is installed on a lower anchor point (131) of an automobile seat (13); c, a signal indicating whether a microswitch in an upper belt buckle (4) and/or a lower belt buckle (5) is triggered when the upper belt buckle (4) and the lower belt buckle (5) of a shoulder belt (16) are connected; d, a signal indicating whether a microswitch in an upper pull belt assembly (3) is triggered when the child safety seat is connected to an upper anchor point (132) in an automobile by means of the upper pull belt assembly (3); f, a signal indicating whether a microswitch in a supporting leg of the child safety seat is triggered when the supporting leg makes contact with presses an automobile chassis after the supporting leg is installed.

4. The child safety seat with an installation prompt function according to any of claims 1 to 3, **characterized by** further comprising a transmitting module, and the child seat installation and use signal collection module (7) sends a signal to the child seat installation and use prompt module (1) through the transmitting module in a wired or wireless manner.

5. The child safety seat with an installation prompt function according to any of claims 1 to 4, **characterized in that**
the child seat installation and use signal collection module (7) is installed in the seat back; or/and the child seat installation and use prompt module (1) is installed in a headrest; or/and the indicating lights are installed on the headrest (2) of the child safety seat; the indicating lights comprise one or more of a power LED indicating light (L1), a pressure sensor LED indicating light (L2), an ISOFIX installed LED indicating light (L3), a belt buckle installed LED indicating light (L4), an upper pull belt assembly installed LED indicating light (L5), and a supporting leg installed LED indicating light (L6).

6. The child safety seat with an installation prompt function according to any of claims 1 to 5, **characterized in that** the power supply comprises a battery (15), and the battery (15) is used for supplying power to the child seat installation and use prompt module (1); and/or the power supply comprises a battery compartment (9) and a USB interface (10), and the battery compartment (9) and the USB interface (10) are used for supplying power to the child seat installation and use signal collection module (7).

7. An installation prompt method for a child safety seat, comprising:
step 1, turning on a power LED indicating light (L1) to indicate that a control panel is in a normal state when a power supply supplies power to a child seat installation and use prompt module (1) and a child seat installation and use signal collection module (7), and turning off the power LED indicating light (L1) if the power supply breaks down during power supplying; and
step 2, activating a pressure sensor in a support part of a seat back (8) or a cushion of the child safety seat if a child sits in the child safety seat, sending a signal to the child seat installation and use signal collection module (7) by the pressure sensor (6), sending a signal to the child seat installation and use prompt module (1) by the child seat installation and use signal collection module (7) in a wired or wireless manner, turning on a pressure sensor LED indicating light (L2) by the child seat installation and use prompt module (1) after receiving the signal to indicate that the child has sat in the seat, and turning off the pressure sensor LED indicating light (L2) if the child has left the seat.

8. The installation prompt method for the child safety seat according to claim 7, after the child sits in the seat, comprising step 31: if the ISOFIX assembly (12) is correctly installed on a lower anchor point (131) of the automobile seat (13), a microswitch in the ISOFIX assembly (12) is triggered, the microswitch in the ISOFIX assembly (12) sends a signal to the child seat installation and use signal collection module (7), the child seat installation and use signal collection module (7) sends the signal to the child seat installation and use prompt module (1) in a wired or wireless manner, the child seat installation and use prompt module (1) turns on the ISOFIX installed LED indicating light (L3) after receiving the signal to indicate that an ISOFIX is installed, and if a hook of the ISOFIX assembly (12) is disengaged from the lower anchor point (131) of the automobile seat (13) due to vibration or other reasons during driving, the ISOFIX installed LED indicating light (L3) is turned off to indicate that the ISOFIX assembly (12) is not installed correctly.

9. The installation prompt method for the child safety seat according to claim 7 or 8, after the child sits in the seat, comprising step 32: if an upper belt buckle (4) of a shoulder belt is correctly installed in a lower belt buckle (5), a microswitch in the lower belt buckle (5) is triggered, the microswitch in the lower belt buckle (5) sends a signal to the child seat installation and use signal collection module (7), the child seat installation and use signal collection module (7) sends the signal to the child seat installation and use prompt module (1) in a wired or wireless manner, the child seat installation and use prompt module (1) turns on a belt buckle installed LED indicating light (L4) after receiving the signal to indicate that the belt buckles are installed, and if the upper belt buckle is separated from the lower belt buckle due to vibration or other reasons during driving, the belt buckle installed LED indicating light (L4) is turned off to indicate that the belt buckles are not installed correctly.

10. The installation prompt method for the child safety seat according to claim 7 or 8 or 9, after the child sits in the seat, comprising step 33: if an upper pull belt assembly (3) is correctly installed on an upper anchor point (132) of the automobile seat (13) and tightened to a set tension, a microswitch in the upper pull belt assembly (3) is triggered, the microswitch in the upper pull belt assembly (3) sends a signal to the child seat installation and use signal collection module (7), the child seat installation and use signal collection module (7) sends the signal to the child seat installation and use prompt module (1) in a wired or wireless manner, the child seat installation and use prompt module (1) turns on an upper pull belt assembly (3) installed LED indicating light (L5) after receiving the signal to indicate that the upper pull belt assembly (3) is installed, and if a hook (31) of the upper pull belt assembly (3) is disengaged from the upper anchor point (132) in the automobile due to vibration or other reasons during driving or the upper pull belt assembly (3) is loosened and does not reach the set tension, the upper pull belt assembly (3) installed LED indicating light (L5) is turned off to indicate that the upper pull belt assembly (3) is not installed correctly.

11. The installation prompt method for the child safety seat according to claim 7 or 8 or 9 or 10, after the child sits in the seat, comprising step 34: if one end of a supporting leg is pressed with an automobile chassis to reach a set pressure value after the supporting leg is installed, a microswitch in the supporting leg is triggered, the microswitch in the supporting leg sends a signal to the child seat installation and use signal collection module (7), the child seat installation and use signal collection module (7) sends the signal to the child seat installation and use prompt module (1) in a wired or wireless manner, the child seat installation and use prompt module (1) turns on a supporting leg installed LED indicating light (L6) after receiving the signal to indicate that the supporting leg is installed, and if the supporting leg is separated from the automobile chassis or the value of the pressure between the supporting leg and the automobile chassis does not reach the set value due to vibration or other reasons during driving, the supporting leg installed LED indicating light (L6) is turned off to indicate that the supporting leg is not installed correctly.

## Patentansprüche

1. Kindersicherheitssitz mit einer Installationsaufforderungsfunktion, **dadurch gekennzeichnet, dass** er umfasst:
ein Kindersitzinstallations- und Nutzungssignalerfassungsmodul (7) zum Erfassen eines Signals, welches anzeigt, ob verschiedene Teile des Kindersicherheitssitzes an Ort und Stelle in einem Kraftfahrzeug installiert sind; ein Kindersitzinstallations- und Nutzungsaufforderungsmodul (1), um nach dem Empfangen eines oder mehrerer von dem Kindersitzinstallations- und Nutzungssignalerfassungsmodul (7) gesendeten Signale eine oder mehrere Anzeigeleuchten dementsprechend einzuschalten oder auszuschalten, um anzuzeigen, ob der Kindersicherheitssitz an Ort und Stelle an verschiedenen Verbindungsteilen des Kraftfahrzeugs installiert ist; und eine Stromversorgung, um das Kindersitzinstallations- und Nutzungssignalerfassungsmodul (7) und das Kindersitzinstallations- und Nutzungsaufforderungsmodul (1) mit Strom zu versorgen.

2. Kindersicherheitssitz mit einer Installationsaufforderungsfunktion nach Anspruch 1, wobei das Kindersitzinstallations- und Nutzungssignalerfassungsmodul (7) konfiguriert ist, um ein Signal, welches anzeigt, ob verschiedene Teile des Kindersicherheitssitzes an Ort und Stelle in einem Kraftfahrzeug installiert sind, und ein Signal zu erfassen, das anzeigt, ob ein Kind den Kindersicherheitssitz nutzt;
das Kindersitzinstallations- und Nutzungsaufforderungsmodul (1) konfiguriert ist, um nach dem Empfangen eines oder mehrerer von dem Kindersitzinstallations- und Nutzungssignalerfassungsmodul (7) gesendeten Signale eine oder mehrere Anzeigeleuchten dementsprechend einzuschalten oder auszuschalten, um anzuzeigen, ob der Kindersicherheitssitz an Ort und Stelle an verschiedenen Verbindungsteilen des Kraftfahrzeugs installiert ist, oder ob das Kind den Kindersicherheitssitz nutzt; und
eine Stromversorgung, um das Kindersitzinstallations- und Nutzungssignalerfassungsmodul (7) und das Kindersitzinstallations- und Nutzungsaufforderungsmodul (1) mit Strom zu versorgen.

3. Kindersicherheitssitz mit einer Installationsaufforderungsfunktion nach Anspruch 1 oder 2, **dadurch gekennzeichnet, dass**
das Kindersitzinstallations- und Nutzungssignalerfassungsmodul (7) mindestens die folgenden verschiedenen Arbeitssignale nutzt: a, ein Signal, welches anzeigt, ob ein Drucksensor in einem Trägerteil einer Sitzlehne (8) oder eines Kissens des Kindersicherheitssitzes aktiviert ist; b, ein Signal, welches anzeigt, ob ein Mikroschalter in einer ISOFIX-Anordnung (12) ausgelöst hat, wenn die ISOFIX-Anordnung (12) an einem unteren Verankerungspunkt (131) eines Kraftfahrzeugsitzes (13) installiert ist; c, ein Signal, welches anzeigt, ob ein Mikroschalter in einer oberen Gurtschließe (4) und/oder einer unteren Gurtschließe (5) ausgelöst hat, wenn die obere Gurtschließe (4) und die untere Gurtschließe (5) eines Schultergurtes (16) verbunden sind; d, ein Signal, welches anzeigt, ob ein Mikroschalter in einer oberen Zuggurtanordnung (3) ausgelöst hat, wenn der Kindersicherheitssitz anhand der oberen Zuggurtanordnung (3) mit einem oberen Verankerungspunkt (132) in einem Kraftfahrzeug verbunden ist; f, ein Signal, welches anzeigt, ob ein Mikroschalter in einem Trägerschenkel des Kindersicherheitssitzes ausgelöst hat, wenn der Trägerschenkel Druckkontakt mit einem Kraftfahrzeug-Fahrgestell aufnimmt, nachdem der Trägerschenkel installiert worden ist.

4. Kindersicherheitssitz mit einer Installationsaufforderungsfunktion nach einem der Ansprüche 1 bis 3, **dadurch gekennzeichnet, dass** er weiter ein Übertragungsmodul umfasst, und das Kindersitzinstallations- und Nutzungssignalerfassungsmodul (7) durch das Übertragungsmodul auf verdrahtete oder drahtlose Art und Weise ein Signal an das Kindersitzinstallations- und Nutzungsaufforderungsmodul (1) sendet.

5. Kindersicherheitssitz mit einer Installationsaufforderungsfunktion nach einem der Ansprüche 1 bis 4, **dadurch gekennzeichnet, dass** das Kindersitzinstallations- und Nutzungssignalerfassungsmodul (7) in der Sitzlehne installiert ist;
und/oder das Kindersitzinstallations- und Nutzungsaufforderungsmodul (1) in einer Kopfstütze installiert ist;
und/oder die Anzeigeleuchten an der Kopfstütze (2) des Kindersicherheitssitzes installiert sind; wobei die Anzeigeleuchten eines oder mehr von einer Betriebs-LED-Anzeigeleuchte (L1), einer Drucksensor-LED-Anzeigeleuchte (L2), einer ISOFIX-installiert-LED-Anzeigeleuchte (L3), einer Gurtschließe-installiert-LED-Anzeigeleuchte (L4), einer oberen Zuggurtanordnung-installiert-LED-Anzeigeleuchte (L5) und einer Trägerschenkel-installiert-LED-Anzeigeleuchte (L6) umfassen.

6. Kindersicherheitssitz mit einer Installationsaufforderungsfunktion nach einem der Ansprüche 1 bis 5, **dadurch gekennzeichnet, dass** die Stromversorgung eine Batterie (15) umfasst, und die Batterie (15) zur Stromversorgung für das Kindersitzinstallations- und Nutzungsaufforderungsmodul (1) genutzt wird; und/oder die Stromversorgung ein Batteriefach (9) und eine USB-Schnittstelle (10) umfasst, und das Batteriefach (9) und die USB-Schnittstelle (10) verwendet werden, um das Kindersitzinstallations- und Nutzungssignalerfassungsmodul (7) mit Strom zu versorgen.

7. Installationsaufforderungsverfahren für einen Kindersicherheitssitz, umfassend:
Schritt 1, Einschalten einer Betriebs-LED-Anzeigeleuchte (L1) zum Anzeigen, dass ein Bedienfeld in einem normalen Zustand ist, wenn eine Stromversorgung ein Kindersitzinstallations- und Nutzungsaufforderungsmodul (1) und ein Kindersitzinstallations- und Nutzungssignalerfassungsmodul (7) mit Strom versorgt, und Ausschalten der Betriebs-LED-Anzeigeleuchte (L1), falls die Stromversorgung während der Stromversorgung ausfällt; und
Schritt 2, Aktivieren eines Drucksensors in einem Trägerteil einer Sitzlehne (8) oder eines Kissens des Kindersicherheitssitzes, falls ein Kind in dem Kindersicherheitssitz sitzt, Senden eines Signals an das Kindersitzinstallations- und Nutzungssignalerfassungsmodul (7) durch den Drucksensor (6), Senden eines Signals an das Kindersitzinstallations- und Nutzungsaufforderungsmodul (1) durch das Kindersitzinstallations- und Nutzungssignalerfassungsmodul (7) in einer verdrahteten oder drahtlosen Art und Weise, Einschalten einer Drucksensor-LED-Anzeigeleuchte (L2) durch das Kindersitzinstallations- und Nutzungsaufforderungsmodul (1) nach Empfangen des Signals zum Anzeigen, dass das Kind in dem Sitz gesessen hat, und Ausschalten der Drucksensor-LED-Anzeigeleuchte (L2), falls das Kind den Sitz verlassen hat.

8. Installationsaufforderungsverfahren für den Kindersicherheitssitz nach Anspruch 7, umfassend Schritt 31, nachdem das Kind in dem Sitz sitzt: falls die ISOFIX-Anordnung (12) korrekt in einem unteren Verankerungspunkt (131) des Kraftfahrzeugsitzes (13) installiert ist, löst ein Mikroschalter in der ISOFIX-Anordnung (12) aus, sendet der Mikroschalter in der ISOFIX-Anordnung (12) ein Signal an das Kindersitzinstallations- und Nutzungssignalerfassungsmodul (7), sendet das Kindersitzinstallations- und Nutzungssignalerfassungsmodul (7) das Signal in einer verdrahteten oder drahtlosen Art und Weise an das Kindersitzinstallations- und Nutzungsaufforderungsmodul (1), schaltet das Kindersitzinstallations- und Nutzungsaufforderungsmodul (1) nach Empfangen des Signals die ISOFIX-installiert-LED-Anzeigeleuchte (L3) ein, um anzuzeigen, dass ein ISOFIX installiert ist, und falls ein Haken der ISOFIX-Anordnung (12) aufgrund einer Vibration oder aus anderen Gründen beim Fahren aus dem unteren Verankerungspunkt (131) des Kraftfahrzeugsitzes (13) gelöst wird, wird die ISOFIX-installiert-LED-Anzeigeleuchte (L3) ausgeschaltet, um anzuzeigen, dass die ISOFIX-Anordnung (12) nicht korrekt installiert ist.

9. Installationsaufforderungsverfahren für den Kindersicherheitssitz nach Anspruch 7 oder 8, umfassend Schritt 32, nachdem das Kind in dem Sitz sitzt: falls eine obere Gurtschließe (4) eines Schultergurts korrekt in einer unteren Gurtschließe (5) installiert ist, löst ein Mikroschalter in der unteren Gurtschließe (5) aus, der Mikroschalter in der unteren Gurtschließe (5) sendet ein Signal an das Kindersitzinstallations- und Nutzungssignalerfassungsmodul (7), das Kindersitzinstallations- und Nutzungssignalerfassungsmodul (7) sendet in einer verdrahteten oder drahtlosen Art und Weise ein Signal an das Kindersitzinstallations- und Nutzungsaufforderungsmodul (1), das Kindersitzinstallations- und Nutzungsaufforderungsmodul (1) schaltet nach dem Empfangen des Signals die Gurtschließe-installiert-LED-Anzeigeleuchte (L4) ein, um anzuzeigen, dass die Gurtschließen installiert sind, und falls die obere Gurtschließe aufgrund einer Vibration oder aus anderen Gründen beim Fahren von der unteren Gurtschließe getrennt wird, wird die Gurtschließe-installiert-LED-Anzeigeleuchte (L4) ausgeschaltet, um anzuzeigen, dass die Gurtschließen nicht korrekt installiert sind.

10. Installationsaufforderungsverfahren für den Kindersicherheitssitz nach Anspruch 7 oder 8 oder 9, umfassend Schritt 33, nachdem das Kind in dem Sitz sitzt: falls eine obere Zuggurtanordnung (3) korrekt an einem oberen Verankerungspunkt (132) des Kraftfahrzeugsitzes (13) installiert, und mit einer eingestellten Spannung festgezogen ist, löst ein Mikroschalter in der oberen Zuggurtanordnung (3) aus, der Mikroschalter in der oberen Zuggurtanordnung (3) sendet ein Signal an das Kindersitzinstallations- und Nutzungssignalerfassungsmodul (7), das Kindersitzinstallations- und Nutzungssignalerfassungsmodul (7) sendet das Signal in einer verdrahteten oder drahtlosen Art und Weise an das Kindersitzinstallations- und Nutzungsaufforderungsmodul (1), das Kindersitzinstallations- und Nutzungsaufforderungsmodul (1) schaltet nach dem Empfangen des Signals eine obere Zuggurtanordnung (3)-installiert-LED-Anzeigeleuchte (L5) ein, um anzuzeigen, dass die obere Zuggurtanordnung (3) installiert ist, und falls ein Haken (31) der oberen Zuggurtanordnung (3) aufgrund einer Vibration oder aus anderen Gründen beim Fahren aus dem oberen Verankerungspunkt (132) in dem Kraftfahrzeug gelöst wird, oder sich die obere Zuggurtanordnung (3) lockert, und die eingestellte Spannung nicht erreicht, wird die obere Zuggurtanordnung (3)-installiert-LED-Anzeigeleuchte (L5) ausgeschaltet, um anzuzeigen, dass die obere Zuggurtanordnung (3) nicht korrekt installiert ist.

11. Installationsaufforderungsverfahren für den Kindersicherheitssitz nach Anspruch 7 oder 8 oder 9 oder 10, umfassend Schritt 34, nachdem das Kind in dem Sitz sitzt: falls ein Ende eines Trägerschenkels an ein Kraftfahrzeug-Fahrgestell gedrückt wird, um einen eingestellten Druckwert zu erreichen, nachdem der Trägerschenkel installiert worden ist, löst ein Mikroschalter in dem Trägerschenkel aus, der Mikroschalter in dem Trägerschenkel sendet ein Signal an das Kindersitzinstallations- und Nutzungssignalerfassungsmodul (7), das Kindersitzinstallations- und Nutzungssignalerfassungsmodul (7) sendet das Signal in einer verdrahteten oder drahtlosen Art und Weise an das Kindersitzinstallations- und Nutzungsaufforderungsmodul (1), das Kindersitzinstallations- und Nutzungsaufforderungsmodul (1) schaltet nach dem Empfangen des Signals eine Trägerschenkel-installiert-LED-Anzeigeleuchte (L6) ein, um anzuzeigen, dass der Trägerschenkel installiert ist, und falls der Trägerschenkel von dem Kraftfahrzeug-Fahrgestell getrennt wird, oder der Druckwert zwischen dem Trägerschenkel und dem Kraftfahrzeug-Fahrgestell aufgrund einer Vibration oder aus anderen Gründen beim Fahren den eingestellten Wert nicht erreicht, wird die Trägerschenkel-installiert-LED-Anzeigeleuchte (L6) ausgeschaltet, um anzuzeigen, dass der Trägerschenkel nicht korrekt installiert ist.

## Revendications

1. Siège de sécurité pour enfant avec une fonction d'invite d'installation, **caractérisé en ce qu'**il comprend :
un module de collecte de signal d'installation et d'utilisation de siège pour enfant (7) pour collecter un signal indiquant si diverses parties du siège de sécurité pour enfant sont ou non installées en place dans une automobile ;
un module d'invite d'installation et d'utilisation de siège pour enfant (1) pour allumer ou éteindre de manière correspondante, après la réception d'un ou de plusieurs signaux envoyés par le module de collecte de signal d'installation et d'utilisation de siège pour enfant (7), un ou plusieurs voyants indicateurs pour indiquer si le siège de sécurité pour enfant est installé en place sur diverses parties de liaison de l'automobile ; et
une alimentation électrique pour fournir de l'énergie au module de collecte de signal d'installation et d'utilisation de siège pour enfant (7) et au module d'invite d'installation et d'utilisation de siège pour enfant (1).

2. Siège de sécurité pour enfant avec une fonction d'invite d'installation selon la revendication 1, dans lequel le module de collecte de signal d'installation et d'utilisation de siège pour enfant (7) est configuré pour collecter un signal indiquant si diverses parties du siège de sécurité pour enfant sont ou non installées en place dans une automobile et un signal indiquant si un enfant est ou non en train d'utiliser le siège de sécurité pour enfant ;
le module d'invite d'installation et d'utilisation de siège pour enfant (1) est configuré pour allumer ou éteindre de manière correspondante, après la réception d'un ou de plusieurs signaux envoyés par le module de collecte de signal d'installation et d'utilisation de siège pour enfant (7), un ou plusieurs voyants indicateurs pour indiquer si le siège de sécurité pour enfant est ou non installé en place sur diverses parties de liaison de l'automobile ou si un enfant est ou non en train d'utiliser le siège de sécurité pour enfant ; et une alimentation électrique pour fournir de l'énergie au module de collecte de signal d'installation et d'utilisation de siège pour enfant (7) et au module d'invite d'installation et d'utilisation de siège pour enfant (1).

3. Siège de sécurité pour enfant avec une fonction d'invite d'installation selon la revendication 1 ou 2, **caractérisé en ce que**
le module de collecte de signal d'installation et d'utilisation de siège pour enfant (7) utilise au moins les plusieurs signaux de fonctionnement suivants : a, un signal indiquant si un capteur de pression dans une partie de soutien d'un dossier (8) ou un coussin du siège de sécurité pour enfants est ou non activé ; b, un signal indiquant si un microcontact dans un ensemble ISOFIX (12) est ou non déclenché lorsque l'ensemble ISOFIX (12) est installé sur un point d'ancrage inférieur (131) d'un siège d'automobile (13) ; c, un signal indiquant si un microcontact dans une boucle de ceinture supérieure (4) et/ou une boucle de ceinture inférieure (5) est ou non déclenché lorsque la boucle de ceinture supérieure (4) et la boucle de ceinture inférieure (5) d'une ceinture-baudrier (16) sont reliées ; d, un signal indiquant si un microcontact dans un ensemble de ceinture à tirage supérieure (3) est ou non déclenché lorsque le siège de sécurité pour enfant est relié à un point d'ancrage supérieur (132) dans une automobile à l'aide de l'ensemble de ceinture à tirage supérieure (3) ; f, un signal indiquant si un microcontact dans un pied de soutien du siège de sécurité pour enfant est ou non déclenché lorsque le pied de soutien vient au contact de et presse contre un châssis automobile après que le pied de soutien est installé.

4. Siège de sécurité pour enfant avec une fonction d'invite d'installation selon l'une quelconque des revendications 1 à 3, **caractérisé en ce qu'**il comprend en outre un module de transmission, et le module de collecte de signal d'installation et d'utilisation de siège pour enfant (7) envoie un signal au module d'invite d'installation et d'utilisation de siège pour enfant (1) par l'intermédiaire du module de transmission d'une manière filaire ou sans fil.

5. Siège de sécurité pour enfant avec une fonction d'invite d'installation selon l'une quelconque des revendications 1 à 4, **caractérisé en ce que** le module de collecte de signal d'installation et d'utilisation de siège pour enfant (7) est installé dans le dossier ; et/ou le module d'invite d'installation et d'utilisation de siège pour enfant (1) est installé dans un appui-tête ; et/ou les voyants indicateurs sont installés sur l'appui-tête (2) du siège de sécurité pour enfant ; les voyants indicateurs comprennent un ou plusieurs parmi un voyant indicateur DEL d'alimentation électrique (L1), un voyant indicateur DEL de capteur de pression (L2), un voyant indicateur DEL d'installation d'ISOFIX (L3), un voyant indicateur DEL d'installation de boucles de ceinture (L4), un voyant indicateur DEL d'installation d'ensemble de ceinture à tirage supérieur (L5), et un voyant indicateur DEL d'installation de pied de soutien (L6).

6. Siège de sécurité pour enfant avec une fonction d'invite d'installation selon l'une quelconque des revendications 1 à 5, **caractérisé en ce que** l'alimentation électrique comprend une batterie (15), et la batterie (15) est utilisée pour fournir de l'énergie au module d'invite d'installation et d'utilisation de siège pour enfant (1) ; et/ou l'alimentation électrique comprend un compartiment de batterie (9) et une interface USB (10), et le compartiment de batterie (9) et l'interface USB (10) sont utilisés pour fournir de l'énergie au module de collecte de signal d'installation et d'utilisation de siège pour enfant (7).

7. Procédé d'invite d'installation pour un siège de sécurité pour enfant, comprenant :
étape 1, l'action d'allumer un voyant indicateur DEL d'alimentation électrique (L1) pour indiquer qu'un panneau de commande est dans un état normal lorsqu'une alimentation électrique fournit de l'énergie à un module d'invite d'installation et d'utilisation de siège pour enfant (1) et un module de collecte de signal d'installation et d'utilisation de siège pour enfant (7), et l'action d'éteindre le voyant indicateur DEL d'alimentation électrique (L1) si l'alimentation électrique est interrompue pendant la fourniture d'énergie ; et
étape 2, l'activation d'un capteur de pression dans une partie de soutien d'un dossier (8) ou d'un coussin du siège de sécurité pour enfant si un enfant est assis dans le siège de sécurité pour enfant, l'envoi d'un signal au module de collecte de signal d'installation et d'utilisation de siège pour enfant (7) par le capteur de pression (6), l'envoi d'un signal au module d'invite d'installation et d'utilisation de siège pour enfant (1) par le module de collecte de signal d'installation et d'utilisation de siège pour enfant (7) d'une manière filaire ou sans fil, l'action d'allumer un voyant indicateur DEL de capteur de pression (L2) par le module d'invite d'installation et d'utilisation de siège pour enfant (1) après la réception du signal pour indiquer que l'enfant est assis dans le siège, et l'action d'éteindre le voyant indicateur DEL de capteur de pression (L2) si l'enfant a quitté le siège.

8. Procédé d'invite d'installation pour le siège de sécurité pour enfant selon la revendication 7, après que l'enfant est assis dans le siège, comprenant l'étape 31 : si l'ensemble ISOFIX (12) est correctement installé sur un point d'ancrage inférieur (131) du siège automobile (13), un microcontact dans l'ensemble ISOFIX (12) est déclenché, le microcontact dans l'ensemble ISOFIX (12) envoie un signal au module de collecte de signal d'installation et d'utilisation de siège pour enfant (7), le module de collecte de signal d'installation et d'utilisation de siège pour enfant (7) envoie le signal au module d'invite d'installation et d'utilisation de siège pour enfant (1) d'une manière filaire ou sans fil, le module d'invite d'installation et d'utilisation de siège pour enfant (1) allume le voyant indicateur DEL d'installation d'ISOFIX (L3) après la réception du signal pour indiquer qu'un ISOFIX est installé et, si un crochet de l'ensemble ISOFIX (12) est désengagé du point d'ancrage inférieur (131) du siège automobile (13) en raison d'une vibration ou pour d'autres raisons pendant la conduite, le voyant indicateur DEL d'installation d'ISOFIX (L3) est éteint pour indiquer que l'ensemble ISOFIX (12) n'est pas correctement installé.

9. Procédé d'invite d'installation pour le siège de sécurité pour enfant selon la revendication 7 ou 8, après que l'enfant est assis dans le siège, comprenant l'étape 32 : si une boucle de ceinture supérieure (4) d'une ceinture-baudrier est correctement installée dans une boucle de ceinture inférieure (5), un microcontact dans la boucle de ceinture inférieure (5) est déclenché, le microcontact dans la boucle de ceinture inférieure (5) envoie un signal au module de collecte de signal d'installation et d'utilisation de siège pour enfant (7), le module de collecte de signal d'installation et d'utilisation de siège pour enfant (7) envoie le signal au module d'invite d'installation et d'utilisation de siège pour enfant (1) d'une manière filaire ou sans fil, le module d'invite d'installation et d'utilisation de siège pour enfant (1) allume le voyant indicateur DEL d'installation de boucles de ceinture (L4) après la réception du signal pour indiquer que les boucles de ceinture sont installées et, si la boucle de ceinture supérieure est séparée de la boucle de ceinture inférieure en raison d'une vibration ou pour d'autres raisons pendant la conduite, le voyant indicateur DEL d'installation de boucles de ceinture (L4) est éteint pour indiquer que les boucles de ceinture ne sont pas correctement installées.

10. Procédé d'invite d'installation pour le siège de sécurité pour enfant selon la revendication 7 ou 8 ou 9, après que l'enfant est assis dans le siège, comprenant l'étape 33 : si un ensemble de ceinture à tirage supérieure (3) est correctement installé sur un point d'ancrage supérieur (132) du siège automobile (13) et serré à une tension de consigne, un microcontact dans l'ensemble de ceinture à tirage supérieure (3) est déclenché, le microcontact dans l'ensemble de ceinture à tirage supérieure (3) envoie un signal au module de collecte de signal d'installation et d'utilisation de siège pour enfant (7), le module de collecte de signal d'installation et d'utilisation de siège pour enfant (7) envoie le signal au module d'invite d'installation et d'utilisation de siège pour enfant (1) d'une manière filaire ou sans fil, le module d'invite d'installation et d'utilisation de siège pour enfant (1) allume un voyant indicateur DEL d'installation d'ensemble de ceinture à tirage supérieure (3) (L5) après la réception du signal pour indiquer que l'ensemble de ceinture à tirage supérieure (3) est installé et, si un crochet (31) de l'ensemble de ceinture à tirage supérieure (3) est désengagé du point d'ancrage supérieur (132) dans l'automobile en raison d'une vibration ou pour d'autres raisons pendant la conduite ou l'ensemble de ceinture à tirage supérieure (3) est desserré et n'atteint pas la tension de consigne, le voyant indicateur DEL d'installation d'ensemble de ceinture à tirage supérieure (3) (L5) est éteint pour indiquer que l'ensemble de ceinture à tirage supérieure (3) n'est pas correctement installé.

11. Procédé d'invite d'installation pour le siège de sécurité pour enfant selon la revendication 7 ou 8 ou 9 ou 10, après que l'enfant est assis dans le siège, comprenant l'étape 34 : si une extrémité d'un pied de soutien est pressée contre un châssis automobile pour atteindre une valeur de pression de consigne après que le pied de soutien est installé, un microcontact dans le pied de soutien est déclenché, le microcontact dans le pied de soutien envoie un signal au module de collecte de signal d'installation et d'utilisation de siège pour enfant (7), le module de collecte de signal d'installation et d'utilisation de siège pour enfant (7) envoie le signal au module d'invite d'installation et d'utilisation de siège pour enfant (1) d'une manière filaire ou sans fil, le module d'invite d'installation et d'utilisation de siège pour enfant (1) allume un voyant indicateur DEL d'installation de pied de soutien (L6) après la réception du signal pour indiquer que le pied de soutien est installé et, si le pied de soutien est séparé du châssis automobile ou la valeur de la pression entre le pied de soutien et le châssis automobile n'atteint pas la valeur de consigne en raison d'une vibration ou pour d'autres raisons pendant la conduite, le voyant indicateur DEL d'installation de pied de soutien (L6) est éteint pour indiquer que le pied de soutien n'est pas correctement installé.
